# EUROPÄISCHE PATENTSCHRIFT

(11) **EP 2 933 974 B1**
(45) Veröffentlichungstag und Bekanntmachung des Hinweises auf die Patenterteilung: **29.08.2018**
(21) Anmeldenummer: 15001098.1
(22) Anmeldetag: 16.04.2015
(51) Int. Cl.: H04L 29/06

(54) **VERFAHREN ZUR TELEFONISCHEN AUTHENTIFIZIERUNG VON BENUTZERN PRIVATER ODER ÖFFENTLICHER NETZWERKE ZUM DATENAUSTAUSCH**
METHOD FOR TELEPHONE AUTHENTICATION OF USERS OF PRIVATE OR PUBLIC NETWORKS FOR DATA EXCHANGE
PROCÉDÉ D'AUTHENTIFICATION TÉLÉPHONIQUE D'UTILISATEURS DE RÉSEAUX PUBLICS OU PRIVÉS DESTINÉS À L'ÉCHANGE DE DONNÉES

(30) Priorität: 17.04.2014 DE 102014005701
(43) Veröffentlichungstag der Anmeldung: 21.10.2015
(73) Patentinhaber: HST High Soft Tech GmbH, 69126 Heidelberg (DE)
(72) Erfinder: Heintz, Frank, D-08064 Zwickau (DE); Rüdiger, Holger, D-04600 Altenburg (DE)
(74) Vertreter: Dreykorn-Lindner, Werner

(56) Entgegenhaltungen:
- DE-B4-102011 015 486
- US-A1- 2004 243 514
- US-A1- 2007 115 940
- KINNUNEN T ET AL: "An overview of text-independent speaker recognition: From features to supervectors", SPEECH COMMUNICATION, ELSEVIER SCIENCE PUBLISHERS, AMSTERDAM, NL, Bd. 52, Nr. 1, 1. Januar 2010 (2010-01-01) , Seiten 12-40, XP026699600, ISSN: 0167-6393, DOI: 10.1016/J.SPECOM.2009.08.009 [gefunden am 2009-09-03]
- Anonymous: "User Authentication in Mobile Access", checkpoint.com, 22. Februar 2014 (2014-02-22), XP055210524, Gefunden im Internet: URL:https://web.archive.org/web/2014022214 1348/http://sc1.checkpoint.com/documents/R 76/CP_R76_Mobile_Access_WebAdmin/41587.htm [gefunden am 2015-09-01]

## Beschreibung

Die Erfindung betrifft ein Verfahren zur telefonischen Authentifizierung von Benutzern privater oder öffentlicher Netzwerke zum Datenaustausch gemäß dem Patentanspruch 1.

Verfahren zur Authentifizierung von Benutzern beim Datenaustausch sind seit langem bekannt. Ein häufiges Einsatzgebiet dabei sind "Virtuelle private Netzwerke" (VPN), deren Zweck es ist, externen Nutzern meist über öffentliche Netze eine sichere, vertrauliche und korrekte Kommunikation mit zentralen Komponenten zu ermöglichen.

Ebenfalls sind Verfahren und Algorithmen bekannt, um Schlüssel und Daten sicher, vertraulich und korrekt miteinander auszutauschen. Beispielsweise wird mit Hilfe von Schlüsselaustauschverfahren, asymmetrischer und symmetrischer Verschlüsselung eine geheime, manipulationsfreie Kommunikation zwischen zwei Kommunikationspartnern realisiert. Bekannte Verfahren sind zum Beispiel das AES-Verfahren, welches auch bei den meisten VPN-Lösungen als Verschlüsselungsverfahren der Datenpakete mit unterschiedlicher Sicherheitsstufe, abhängig von der Schlüssellänge, eingesetzt wird. Weiterhin sind "Public Key"-Verfahren bekannt, um die Schlüssel zwischen den Kommunikationspartnern sicher auszutauschen.

Ein großes Problem besteht jedoch in der Authentifizierung, die Identität der autorisierten Personen festzustellen, die diese Art von Systemen und Diensten benutzen dürfen. Bekannte Verfahren der Benutzerauthentifizierung sind zum Beispiel:
1. Abfrage von Benutzerdaten wie Benutzerkennung und Passwort. Die Zuverlässigkeit kann mit technischen Hilfsmitteln wie Smartcards, USB-Sticks oder biometrischen Verfahren, wie Fingerprintscannern, erheblich verbessert werden.
2. PIN/TAN-Verfahren, bei dem für jede Sitzung ein spezieller Berechtigungskode notwendig ist, der auf verschiedenen Wegen dem Benutzer von einer zentralen Instanz zur Verfügung gestellt wird.
3. Token zur Erzeugung von zeitlich gesteuerten Zugangsdaten. Örtlich getrennt auf Client- und Serverseite werden gleiche Zugangskodes generiert, welche von Benutzer beim Login angegeben werden müssen.

So ist beispielsweise aus der DE 600 07 883 T2 ein Verfahren und eine Vorrichtung zum Durchführen von elektronischen Transaktionen bekannt, bei dem eine Transaktionsanfrage von einem Anwender an einem Server empfangen, eine Abfrage an den Anwender ausgegeben, eine Antwort vom Anwender basierend auf der Abfrage empfangen und die Antwort, um den Anwender zu überprüfen verarbeitet wird. In weiterer Verfahrensabfolge wird dann das Assemblieren von Berechtigungsnachweisen für die Transaktion, wobei die Berechtigungsnachweise mindestens einen Schlüssel beinhalten, und das Versorgen des Anwenders mit mindestens einem Anteil der Berechtigungsnachweise durchgeführt. Schließlich wird eine zweite Anfrage vom Anwender, wobei die zweite Anfrage einen Anteil der Berechtigungsnachweise umfasst, empfangen und der Anteil der Berechtigungsnachweise mit dem Schlüssel, um Zugang zu einem Transaktionsdienst bereitzustellen, validiert. Die Transaktion ist dabei eine elektronische Einkaufstransaktion, wobei eine digitale Brieftasche verwendet wird. Der Anwender führt die Transaktion mittels einer Smart- bzw. Chip-Karte durch, wobei der Zugang zum Dienst, folgende Schritte beinhaltet:
- Empfangen einer Einlog-Anfrage von einem Anwender,
- Überprüfen, ob der Anwender eine Berechtigungsmarke/ Smart- bzw. Chip-Karte besitzt,
- Versorgen des Anwenders mit einem Berechtigungsnachweis, wenn die Überprüfung erfolgreich ist,
- Empfangen einer Transaktionsanfrage von einem Anwender, wobei die Transaktionsanfrage mindestens einen Teil des Berechtigungsnachweises beinhaltet, und
- Verarbeiten des mindestens einen Teils des Berechtigungsnachweises, um Zugang zu dem Dienst bereitzustellen.
Das Transaktionssystem, welches über ein Datennetz mit einem von dem Anwender bedienten Anwendercomputer verbunden ist, beinhaltet einen sogenannten Transaktionsautorisierer und einen Sicherheitsserver, der so konfiguriert ist, dass überprüft wird, ob der Anwender eine intelligente Berechtigungsmarke besitzt, und um den Anwendercomputer mit einem digitalen Berechtigungsnachweis zu versorgen, wenn diese Überprüfung erfolgreich ist. Der Transaktionsautorisierer ist derart konfiguriert, dass eine vom Anwender erfragte Transaktion mindestens teilweise auf der Basis des digitalen Berechtigungsnachweises - welche von dem Anwendercomputer über das Datennetz bereitgestellt wird - autorisiert wird. Weiterhin weist das Transaktionssystem einen Brieftaschenserver, der über das digitale Netz mit dem Anwendercomputer kommuniziert, auf. Demgemäß stellt die DE 600 07 883 T2 eine Systemlösung zur Authentifizierung und Durchführung von Geschäften über Datennetzwerke, wie beispielsweise das Internet, dar, wobei es hierbei um die Absicherung finanzieller Transaktionen, als um lediglich eine Benutzerlegitimation geht, welche quasi embedded ist.

Weiterhin ist aus der DE 10 2011 015 486 B4 der Anmelderin ein Verfahren und eine Anordnung zur Erstellung situationsgerechter multimedialer Protokolle mittels Telekommunikationsnetz mit WEB- und Sprachportalen bekannt, bei dem zur Nutzung eines aus einem eProtocol-Server, einem WEB-Portal und einem Voice-Portal bestehendem eProtocöl-Systems von einem analogen oder digitalen Endgerät aus über das Telekommunikationsnetz
a) zunächst eine Registrierung des Benutzers im eProtocol-System erfolgt, bei der alle notwendigen Benutzerdaten erfasst und dem Benutzer eine persönliche Identifikationsnummer zugeordnet wird,
b) vom Benutzer eine Protokollsitzung über das Sprachportal oder über das WEB-Portal eröffnet wird,
c) während einer Protokollsitzung mittels des eProtocol-Servers wiederholt Passagen dem aktuellem Protokoll hinzugefügt werden können, indem automatisch generierte Protokollmarken chronologisch erfasst und als neue Zeile oder Absatz im späteren Protokoll angezeigt werden und die einzelnen Passagen beliebige multimediale Objekte beinhalten können,
d) die Protokollsitzung über das WEB-Portal oder über eine Telefonverbindung zum Voice Portal geschlossen werden kann,
e) nach dem Schließen der Protokollsitzung und dem Beenden aller nachgelagerten Prozesse durch das WEB-Portal das Protokoll erstellt und zum Download und dessen Verteilung durch den Benutzer vorbereitet wird,
f) die Registrierung durch das WEB-Portal erfolgt, indem in einer gesicherten HTTPS-Session die Benutzerdaten übertragen werden, wobei ein wesentlicher Bestandteil dieser Daten eine E-Mail-Adresse des Benutzers ist und indem nach vollständiger und korrekter Eingabe dieser Daten das WEB-Portal automatisch eine E-Mail mit den eProtocol-Zugangsdaten versendet, wobei jedem Benutzer dabei eine eindeutige PIN zugeordnet wird, welche nur aus Ziffern besteht und somit auch am Telefon zur Authentifizierung eingegeben werden kann, und
g) zur Authentifizierung über einen Dialog vom WEB-Portal eine Telefonnummer oder URL abgefragt und danach diese über eine Schnittstelle in einem Datenbestand gesucht wird, dass um sicher zu gehen, dass die im Datenbestand eingegebene Rufnummer auch zum Benutzer gehört, dieser vom WEB-Portal aufgefordert wird mit seinem Telefonendgerät, einen ihm vorgegebenen Anschluss im Netz anzuwählen, dass diese statistisch generierte Rufnummer auf einem Telefonie-Server endet, welcher automatisch die eingehende Telefonverbindung dem Datenbestand mit einem Zeitstempel hinzufügt und dass das WEB-Portal dies wiederum durch Aufruf einer Funktion der Schnittstelle feststellen kann und wenn eine eingehende Telefonverbindung registriert werden konnte, vom WEB-Portal dem Benutzer der Zugang zu den Daten, mit den ihm zugeordneten Berechtigungen, gewährt wird.

Um den Aufbau einer Kommunikationsverbindung auch von herkömmlichen Telefonen (ersten Endgerät) aus über ein IP-Netz zu einem IP-Teilnehmer (zweites Endgerät) zu ermöglichen, ist aus der DE 100 09 279 A1 ein Verfahren bekannt, bei dem von dem ersten Endgerät eine Rufnummer, die die Übergabe des Verbindungsaufbaus auf einen Diensterechner bewirkt, gewählt wird, bei dem durch den Diensterechner der Aufbau einer Sprachverbindung von dem ersten Endgerät zu einer Spracherkennungseinrichtung veranlasst wird, bei dem eine Ziel-Adresse des zweiten Endgeräts über das erste Endgerät in einem Sprachformat eingegeben wird, bei dem die Ziel-Adresse mittels Spracherkennung von dem Sprachformat in ein IP-kompatibles Format umgewandelt wird und bei dem von dem Diensterechner der Aufbau der Kommunikationsverbindung von dem ersten Endgerät zu dem zweiten Endgerät über ein Gateway unter Zuhilfenahme der Ziel-Adresse in dem IP-kompatiblen Format veranlasst wird. Zum Verbindungsaufbau wird von dem Telefon eine Rufnummer gewählt, die die Übergabe des Verbindungsaufbaus auf einen Diensterechner bewirkt. Das Telefonnetz ist als ein digitales oder analoges Telefonnetz ausgebildet und der Übergang von dem herkömmlichen analogen Telefonnetz in das (digitale) IP-Netz ist mittels eines Gateways realisiert. Anhand der gewählten Rufnummer und anhand anderer Verbindungsparameter (Herkunft des Anrufes, Datum, Uhrzeit, etc.) erkennt der Diensterechner, dass eine Ziel-Adresse eines Internet-Protocol (IP)-Teilnehmers im Sprachformat eingegeben werden soll und veranlasst den Aufbau einer Sprachverbindung von dem ersten Endgerät zu einer Spracherkennungseinrichtung. Die Spracherkennungseinrichtung ist entweder als eigenständige Einrichtung ausgebildet oder aber in den Diensterechner integriert oder die Spracherkennungseinrichtung ist integraler Bestandteil der Vermittlungsstelle. Zur Eingabe der Ziel-Adresse wird - wahlweise auf eine Aufforderung der Spracherkennungseinrichtung hin - die Ziel-Adresse des IP-Teilnehmers ganz einfach von dem Anrufer in das Telefon gesprochen. Die Ziel-Adresse ist beispielsweise eine Electronic-Mail (eMail)-Adresse, eine Internet-Protocol (IP)-Adresse oder die Adresse einer Homepage des Teilnehmers im IP-Netz. Die Spracherkennungseinrichtung wandelt dann die Ziel-Adresse von dem Sprachformat in ein IP-kompatibles Format um. Schließlich veranlasst der Diensterechner unter Zuhilfenahme der Ziel-Adresse in dem IP-kompatiblen Format den Aufbau der Kommunikationsverbindung von dem ersten Endgerät zu dem zweiten Endgerät des IP-Teilnehmers über das Telekommunikationsnetz, das Gateway und das IP-Netz. Der Diensterechner und die Spracherkennungseinrichtung sind Teil eines Intelligenten Netzes. Dazu ist der Diensterechner als ein sog. Service Control Point (SCP) ausgebildet. Die Vermittlungsstelle des Telekommunikationsnetzes ist als ein sog. Service Switching Point (SSP) ausgebildet. Die Spracherkennungseinrichtung ist beispielsweise auf einem sogenannten Specialized Resource Point (SRP) des Intelligenten Netzes realisiert. Dadurch wird es denjenigen Telefonnutzern ermöglicht, die lediglich über ein herkömmliches Telefon mit Wählscheibe oder einfacher Zifferntastatur verfügen, ohne Zusatzgeräte eine Ziel-Adresse eines IP-Teilnehmers einzugeben und Voice-over-Internet-Protocol (VoIP)-Gespräche zu führen.

Die vorstehend aufgezeigten Lösungen haben ein gemeinsames Problem. Die Eingabe der Daten für die Authentifizierung findet auf der Client-Seite statt. Die Daten werden zum Server auf dem gleichen Wege übertragen, wie später auch die Nutzdaten. Angreifer können damit leicht den Datenaustausch zur Authentifizierung dann dem späteren Datenaustausch der Nutzdaten zuordnen und sich dadurch möglicherweise Vorteile beim Angriff auf die Systeme verschaffen.

In diesem Zusammenhang ist aus der DE 10 2004 021 469 A1 ein Authentifizierungsverfahren zur Überprüfung einer Zugangsberechtigung zu einem Computersystem bekannt, bei dem eine erste Verbindung zur Datenübertragung zwischen einem Ausgangs-Computersystem und einem Zugangs-Computersystem, welches des Zugang zu einer Datenbank freischaltet, aufgebaut wird. Nach Übermittlung eines Berechtigungscodes an das Zugangs-Computersystem erfolgt die Übermittlung einer Aufforderung an das Ausgangs-Computersystem. Hierdurch wird zum Aufbau einer zweiten Verbindung über ein Telefonnetz aufgefordert. Durch den Aufbau dieser zweiten Verbindung wird automatisch die Telefonnummer eines Telekommunikationsgerätes an das Authentifizierungssystem übermittelt. Nach Vergleich der übermittelten Telefonnummer mit einer bezüglich des Berechtigungscodes gespeicherten Telefonnummer wird der Zugang zu dem Zugangs-Computersystem gestattet. Das aus der DE 10 2004 021 469 A1 bekannte Authentifizierungsverfahren nutzt zur Überprüfung der Zugangsberechtigung zwei Verbindungen zur Datenübertragung. Bei der ersten Verbindung zwischen einem Ausgangs-Computersystem und einem Zugangs-Computersystem handelt es sich beispielsweise um eine Verbindung über das Internet. Im zweiten Schritt des Authentifizierungsverfahrens wird an den Benutzer eine Aufforderung übermittelt, eine zweite Verbindung zu dem Zugangs-Computersystem über ein Telefonnetz aufzubauen. Die Übermittlung der Aufforderung kann hierbei über die erste Verbindung oder über eine weitere unabhängige Verbindung erfolgen, wobei beispielsweise die Mobilfunk-Telefonnummer, in Verbindung mit dem hinterlegten Berechtigungscode im Zugangs-Computersystem gespeichert ist. Die Nutzung der Telefonnummer hat den Vorteil, dass über eine zweite Verbindung, d. h. eine beispielsweise vom Internet unabhängige Datenübertragungsverbindung, insbesondere eine Telefonverbindung, ein eindeutiger Benutzercode übermittelt wird und die Übertragung von Telefonnummern mit hoher Sicherheit erfolgt und der Benutzer nur, wie üblich, einen Berechtigungscode, d. h. beispielsweise einen Benutzernamen und ein Passwort, eingeben muss. Bei einer Weiterbildung des Authentifizierungsverfahrens gemäß der DE 10 2004 021 469 A1 erfolgt vor dem Freischalten der Datenbank zusätzlich über eine Verbindung, beispielsweise ein Mobilfunknetz, die Übermittlung eines Codes. Dieser muss sodann durch den Benutzer in das Ausgangs-Computersystem über beispielsweise seinen Laptop eingegeben oder an diesen durch eine Datenübermittlung übermittelt werden. Der zusätzliche Code, der schriftlich oder mündlich übermittelt werden kann, kann beispielsweise an ein Empfangsgerät, wie ein Mobilfunktelefon oder einen Pager, vorzugsweise über eine unabhängige weitere Verbindung übermittelt werden. Der Code kann sodann von dem Benutzer eingegeben werden. Dies hat den Vorteil, dass auf einen Teil der in dem Zugangs-Computersystem gespeicherten Daten bereits nach Durchführen des vorstehenden Verfahrens zugegriffen werden kann und auf Daten mit hohen Sicherheitsanforderungen nur durch die Eingabe des zusätzlich übermittelten Codes zugegriffen werden kann. Hierdurch ist die Sicherheit der Zugangsberechtigung weiter erhöht.

Ein ähnliches Authentifizierungsverfahren zur Überprüfung einer Zugangsberechtigung zu einem Computersystem ist aus der US 2010/0 261 532 A1 bekannt. Um sichere Online-Spiele zu ermöglichen, insbesondere das Stehlen von virtuellen Geld, virtuellen Schätzen oder Mehrwertdiensten zu verhindern, weist das Kommunikationssystem einen bidirektionalen Kommunikationszertifizierungsmechanismus auf, der ein interaktives Sprachmodul, einen Kommunikationssperrserver und einen Spielserver umfasst, wobei der Eingang des interaktiven Sprachmoduls mit einem Sprachkommunikationsnetz und der Ausgang mit dem Kommunikationssperrserver verbunden ist. Der Kommunikationssperrserver ist ferner zur Übertragung von Nachrichten mit dem Spielserver verbunden und weist eine Nummern-Datenbank zur Speicherung mindestens einer Telefonnummer und einem temporären Passwort des Client auf. Wenn die Telefonnummer und das entsprechende temporäre Passwort in der Nummern-Datenbank gespeichert sind, wird ein Timer/Zeitglied im Kommunikationssperrserver gestartet und nach Zeitablauf (beispielsweise 3 Min) werden die Telefonnummer und das temporäre Passwort im Kommunikationssperrserver gelöscht. Dadurch, dass das temporäre Passwort nicht dauerhaft im Kommunikationssperrserver gespeichert wird, kann dieses vom Anwender einfach geändert werden und die Gefahr, dass der Kommunikationssperrserver von einem illegalen Benutzer gesteuert wird, wird weiter verringert. Darüber hinaus ist der Spielserver ferner mit dem Internet verbunden, worüber eine Verbindung zu einem Daten-Endgerät des Benutzers besteht (wie etwa einen Personal Computer, einen Notebook-Computer, etc.), wobei der Spiel-Server eine Benutzerdatenbank aufweist und diese eine Vielzahl von Benutzerdaten speichert. Wenn der Spiel-Server eine Anmeldeanforderungsnachricht vom Endgerät eines Benutzers empfängt, kann der Spiel-Server einen Spielstand, ein Spielpasswort, eine Telefonnummer und ein temporäres Passwort, enthalten in der Login-Anforderungsnachricht (welche in einem Formular auf dem Monitor des Endgeräts, einschließlich der zur Verfügung stehenden Zeitdauer für den Login angezeigt werden), lesen und dann diese mit den entsprechenden Benutzerdaten in der Benutzerdatenbank vergleichen. Nach dem Vergleich sendet der Spiel-Server eine Zertifizierungs-Nachricht (einschließlich der Telefonnummer und dem temporären Passwort) an den Kommunikationssperrserver, um zu überprüfen, dass eine bestimmte Telefonnummer und ein entsprechendes temporäres Passwort im Kommunikationssperrserver bestand. Wenn eine bestimmte Telefonnummer und ein entsprechendes temporäres Passwort im Kommunikationssperrserver vorhanden sind, kann das Daten-Endgerät die Zertifizierung übergeben, so dass dieses sich im Spiel-Server einloggen kann. Wenn eine bestimmte Telefonnummer und ein entsprechendes temporäres Passwort im Kommunikationssperrserver nicht vorhanden ist (weil beispielsweise die Telefonnummer und das temporäre Passwort gelöscht wurde oder die Telefonnummer zur Voreinstellung des temporäres Passwort falsch ist), besteht das Daten-Endgerät nicht die Zertifizierung und das Daten-Endgerät kann sich nicht beim Spiel-Server anmelden. Beim Gegenstand der US 2010/0 261 532 A1 übermittelt der Nutzer an die zentrale Komponente seine Telefonnummer (Kommunikationsweg 1) und gibt diese während des Logins zusammen mit weiteren Daten, nämlich Spielstand, Spielpasswort, temporäres Passwort an (Kommunikationsweg 2). Die Rufnummer ist also nicht in der zentralen Komponente hinterlegt. Außerdem wird ein Einwegpasswort für den Verbindungsaufbau vereinbart, so dass die Verbindungen zusammen geschaltet werden können. Es müssen letztendlich vom Nutzer ein beliebiger Nutzername (so dass der Nutzer anonym bleibt), Passwort, Telefonnummer und Einwegpasswort für den Verbindungsaufbau übermittelt werden (Client).

Ein weiteres Beispiel zum Durchführen von Online-Transaktionen mit einer Sprachauthentifizierung für die Identität des Käufers und unter Verwendung einer Kredit- oder EC-Karte, insbesondere hinsichtlich Abschluss der Transaktion durch Mastercard's Umsetzung des 3-D Secure-Protokoll, ist aus der US 2004/243514 A1 bekannt. Zur Gewährleistung einer besonders einfachen Authentifizierung muss vor der Authentifizierung eine Registrierung der Person erfolgen, wobei das Stimmprofil und/oder persönliche Daten der Person (insbesondere einen Namen und/oder Adress- und/oder Bank- und/oder Kreditkartendaten und/oder Transaktionslimits) als erste Sprachprobe übermittelt werden. Dabei wird eine Telefonverbindung zwischen der Person und einer Authentifizierungseinrichtung hergestellt, die auf ein Stimmprofil der Person zugreifen kann. Durch die Kombination von Stimmprofil und hinterlegter Telefonnummer ist eine sichere Authentifizierung einer mit Kreditzahlung zahlenden Person bei der Registrierung erreicht. Der Bezahlvorgang durch den Kunden beim Händler wird beim Gegenstand der US 2004/243514 A1 zunächst in üblicher Weise unter Verwendung der Kreditkarte eingeleitet. Hierbei kommuniziert die Kreditkartendatenbank (MasterCard(R) directory) mit einem Zugangskontrollserver (Issuer Access Control Server) um zu überprüfen, ob der Karteninhaber an der geplanten Zahlungs-Transaktion beteiligt ist. Unter der Annahme der Karteninhaber ist zur die Teilnahme berechtigt, dann überträgt die Kreditkartendatenbank eine Registrierungsbestätigungsnachricht an das Händler-Computersystem, welche darauf hinweist, dass als nächstes eine Sprachauthentifizierung durchgeführt werden wird. Die Registrierungsbestätigungsnachricht kann vorzugsweise in Form einer Verify Enrolment Response (VERes) in Übereinstimmung mit MasterCard^{(R)} 's Umsetzung des 3-D Secure-Protokoll erfolgen. Demgemäß erfolgt in einer bestimmten Reihenfolge der Austausch von Verify Enrolment Request (VEReq) Nachrichten, Verify Enrolment Response (VERes) Nachrichten, Payer Authentication Request (PAReq) Nachrichten und Payer Authentication Response (PARes) Nachrichten im Rahmen des 3-D Secure-Protokolls. Nachdem der Zugangskontrollserver (Issuer Access Control Server) vom Händler die Payer Authentication Request (PAReq) Nachricht erhalten hat, ruft das Issuer Automated Voice Response System den Kartenbesitzer per Telefon unter der in der Händleranfrage erhaltenen Rufnummer an. Nachdem der Anruf mit einer Partei - angenommen, dass dies der Karteninhaber sei - hergestellt ist, fordert das Issuer Automated Voice Response System die Partei auf, ein zufälliges Wort oder eine Reihe von Wörtern zu sprechen, damit dieses eine Abtastprobe (zweite Sprachprobe) von der Stimme des Karteninhabers bekommt. Das zweite Sprachprobe wird dann mit der gespeicherten ersten Sprachprobe verglichen, um zu überprüfen, ob die angerufene Partei in der Tat der Karteninhaber oder durch den Karteninhaber autorisiert ist. Dieser Vergleich kann auf vielfältige Weise mit den in der Technik bekannten Mitteln der Sprachbiometrie durchgeführt werden. Wenn eine gewisse Diskrepanz erkannt wird, und die Partei der aktuell bestehenden Telefonverbindung wird nicht als Karteninhaber oder eine andere durch den Karteninhaber autorisierte Person identifiziert, kann die Transaktion abgelehnt und eine Authentifizierungsfehler-Nachricht (authentication failure message) an den Händler übermittelt werden. Andernfalls, wenn der Karteninhaber als Partei der aktuell bestehenden Telefonverbindung ermittelt ist, fordert das Issuer Automated Voice Response System den Karteninhaber auf, die Genehmigung für die Transaktion zu erteilen. Dies kann durch das Eingeben von Informationen in Bezug auf die Transaktion und durch Spracheingabe des Karteninhaber mit "ja" oder "nein", die vom Issuer Automated Voice Response System verstanden werden kann, erfolgen. Wie bereits vorstehend erläutert, wenn der Karteninhaber die Transaktion nicht genehmigen kann, wird die Transaktion abgelehnt und eine Authentifizierungsfehler-Nachricht (authentication failure message) an den Händler übermittelt. Wenn der Karteninhaber die Transaktion genehmigt, war die Überprüfung erfolgreich und eine Antwort "Überprüfung erfolgreich" kann vom Issuer Automated Voice Response System erzeugt und an den Händler übermittelt werden. Der Händler kann dann die Transaktion in Übereinstimmung mit einem 3-D Secure-Protokoll oder durch andere bekannte Techniken durchführen.

Weiterhin ist in SPEECH COMMUNICATION, Elsevier science, pulishers, Amsterdam, NL, Bd. 52, Nr. 1, 1. Januar 2010, Seiten 12-40, ein Aufsatz "An overview of text-independent Speaker recognition: From features to supervectors" von Tomi Kinnunen et al erschienen, welcher einen Überblick über die automatische Sprechererkennung -Technologie, mit dem Schwerpunkt Text-unabhängige Erkennung untersucht. Dabei werden neue Entwicklungen und Bewertungsmethoden von Sprechererkennungssystemen mit statistischen Modellen, diskriminativen Modellen und der Übergang von Merkmalsvektoren zu Supervektoren beschrieben und erläutert.

Weiterhin ist aus der US 2007/0115940 A1 ein Verfahren und ein System zur Multi-Level-sicheren persönlichen Profilverwaltung und Zugriffskontrolle für ein Unternehmen mit multi-modaler Kommunikationsumgebung in heterogenen konvergenten Kommunikationsnetze, insbesondere dem Gebiet der IP-Telefonie und des Voice-over-Internet-Protocols (VoIP), beschrieben und erläutert. Der sichere Zugriff basiert auf der Verwendung eines Internet-Protokolls mit einer physikalischen Authentifizierung des Benutzers bei einem Voice-fähigen Kommunikationsterminal, wobei zusätzlich eine biometrische Authentifizierung, eine logische Authentifizierung (Benutzerprofilfunktionen) durchgeführt wird und bei erfolgreicher Bestätigung des Benutzers, der Zugang zu dem Kommunikationsendgerät erlaubt wird. Ein hierfür zusätzlich notwendiger persönlicher Authentifizierungsleser (secure personal authentication reader (SPAR)) kann eine beliebige Kombination von Smart-Card-Lesegerät, biometrischen Lesegerät (Fingerabdruck, Handabdruck, Iris / Retina - Lesegerät), Magnetkarte oder RFID (Radio Frequency Identification) enthalten. In der Kombination von IP - Telefon und SPAR - Gerät wird ein "Secure Service Access Point" (SSAP) erhalten, wobei es drei Stufen der Sicherheit, nämlich eine physikalische Authentifizierung, eine logische Authentifizierung und biometrische Authentifizierung gibt.

Wie die vorstehende Würdigung des Standes der Technik aufzeigt, sind unterschiedlich ausgestaltete Verfahren und Vorrichtungen zur Authentifizierung von Benutzern beim Datenaustausch auf verschiedenen technischen Gebieten bekannt. In der Regel werden die Daten zum Server auf dem gleichen Wege übertragen, wie später auch die Nutzdaten, wobei stets eine Datenverbindung und beim Gegenstand der DE 10 2004 021 469 A1 eine Telefonverbindung aufgebaut wird. Wenig Beachtung findet jedoch die Berücksichtigung der beim Benutzer vorhandenen Ausstattung, um darauf basierend eine sichere Authentifizierung zu ermöglichen. Deshalb fehlen in der Praxis in Hinblick auf die Mobilität kostengünstige Verfahren und Systeme zur telefonischen Authentifizierung von Benutzern. Besonders bedeutsam ist dies, weil die Telekommunikations- und Computerindustrie als fortschrittliche, entwicklungsfreudige Industrien anzusehen sind, die schnell Verbesserungen und Vereinfachungen aufgreifen und in die Tat umsetzen.

Der Erfindung liegt die Aufgabe zugrunde, ein Verfahren zur telefonischen Authentifizierung derart auszugestalten, dass durch Berücksichtigung der beim Benutzer vorhandenen Ausstattung keine Änderung des mit dieser Ausstattung üblichen Anmeldevorgangs erforderlich ist und der Benutzer unter verschiedenen Sicherheitsstufen wählen kann.

Diese Aufgabe wird ausgehend von einem Verfahren nach dem Oberbegriff des Patentanspruchs 1, dadurch gelöst, dass der Benutzer in einem Registrierungsprozess vorher für verschiedene Sicherheitsstufen von der zentralen Telefonendeinrichtung erfasst worden ist, dass zur telefonischen Authentifizierung des Benutzers, dieser nach dem Registrierungsprozess im ersten Schritt in der niedrigsten Sicherheitsstufe mit einem Telefonendgerät über ein zweites Netz auf einer speziellen, der zentralen Telefonendeinrichtung zugewiesenen Rufnummer anruft, dass im zweiten Schritt die zentrale Telefonendeinrichtung die Rufnummer des Anrufers und die gewählte Rufnummer und die nach Wahl des Benutzers zur gewählten Rufnummer beim Registrierungsprozess zugeordnete Sicherheitsstufe ermittelt und über ein drittes Netz diese in die Datenbank schreibt und die Telefonverbindung derart beendet, dass der Anruf von der zentralen Telefonendeinrichtung nicht angenommen, sondern nach der Verifizierung abgewiesen wird, dass im dritten Schritt ein solcher Anruf für eine bestimmte Zeit gespeichert und dann nach Ablauf einer Verfallszeit dieser in der Datenbank wieder gelöscht wird, dass im vierten Schritt der Benutzer mit seinem Datenendgerät durch die Übermittlung von Daten, die dem Benutzer eindeutig zugeordnet werden können, eine Verbindung über das erste Netz mit der zentralen Dateneinrichtung herstellt, dass im fünften Schritt die Datenendeinrichtung, durch eine Datenbankanfrage an die Datenbank prüft, ob diese Daten mit denen aus dem Registrierungsprozess übereinstimmen und ein Eintrag für den Benutzer aus Schritt drei vorhanden ist und dass im sechsten Schritt für den Fall, dass ein entsprechender Datensatz in der Datenbank gefunden wird, die Kommunikation zwischen Datenendgerät und zentraler Dateneinrichtung zugelassen und eine gesicherte Sitzung eröffnet wird und für den Fall, dass kein Datensatz gefunden werden konnte oder die Verfallszeit für die Gültigkeit der Autorisierung abgelaufen ist, die Abfrage der Datenbank durch die Dateneinrichtung abgelehnt wird.

Das erfindungsgemäße Verfahren weist den Vorteil auf, dass zum Transport der Authentifizierungsdaten vom Benutzer zum Server ein zweiter Kommunikationsweg, nämlich das Telefonnetz, genutzt wird. Die Authentifizierung kann mit an sich bekannten Methoden durchgeführt werden, indem der Benutzer Wissen (z.B. PIN, Passwort, anzurufende Telefonnummer, Zeitpunkt), Besitz (z.B. eigene Telefonnummer) und Eigenschaften (z.B. biometrische Sprachmerkmale) zur Feststellung seiner Identität übermittelt. Die Heranziehung dieser Daten zur Authentifizierung kann weiterhin in verschiedenen Sicherheitsstufen durchgeführt werden. Darüber hinaus sind keine speziellen, zusätzlichen Geräte notwendig, als ein, in den meisten Fällen ohnehin verfügbares, persönliches Telefonendgerät. Da auf der Seite des Datenverarbeitungsgerätes (Client) keine Veränderungen zur normalen Prozedur des Anmeldevorgangs erforderlich ist, kann dieses Verfahren auch bei Systemen eingesetzt werden, bei denen keine Eingriffsmöglichkeit in den Authentifizierungsvorgang auf dem Datenkanal der Clientseite möglich ist. Hierzu zählen auch Systeme, die in dedizierter Hardware abgebildet sind, wie zum Beispiel DSL-Router.

Im Vergleich zum Gegenstand der US 2010/0 261 532 A1 müssen beim erfindungsgemäßen Verfahren auf der Nutzerseite, an der zum Einsatz kommenden Software keine Veränderungen vorgenommen oder zusätzliche Eingaben zur bisherigen Authentifizierung eingegeben werden (Vorteil: es können Standardlösungen wie z.B. OpenVPN genutzt werden).

Im Vergleich zum Authentifizierungsverfahren der DE 10 2004 021 469 A1 wird beim erfindungsgemäßen Verfahren erst, völlig unabhängig vom Datensystem, eine Telefonaktivität durchgeführt. Es ist keine Telefonverbindung notwendig, sondern nur die Anrufsignalisierung. Durch die völlige Trennung der Aktivitäten ist keine Änderung des üblichen Anmeldevorgangs erforderlich. Es kann beim erfindungsgemäßen Verfahren z.B. ein handelsüblicher VPN-Client eingesetzt werden, welcher diese zusätzliche Absicherung nicht kennen muss. Der Anwender wird im Dialog mit dem System auch nicht, wie beim Gegenstand der DE 10 2004 021 469 A1, daraufhin gewiesen einen Telefonanruf durchzuführen. Dies hat den großen Vorteil, dass man das erfindungsgemäße Verfahren auch in Geräte implementieren kann, wie zum Beispiel einem DSL-Router, welcher erst dann die Verbindung zur Gegenstelle herstellt, wenn eine Authentifizierungsaktion durchgeführt wurde. Solche Geräte bieten in der Regel keine Dialogschnittstellen.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: die Netzstruktur für die Realisierung des erfindungsgemäßen Verfahrens und
- FIG. 2: das Zustandsdiagramm für eine erfolgreiche Authentifizierung für die Anordnung nach FIG. 1.

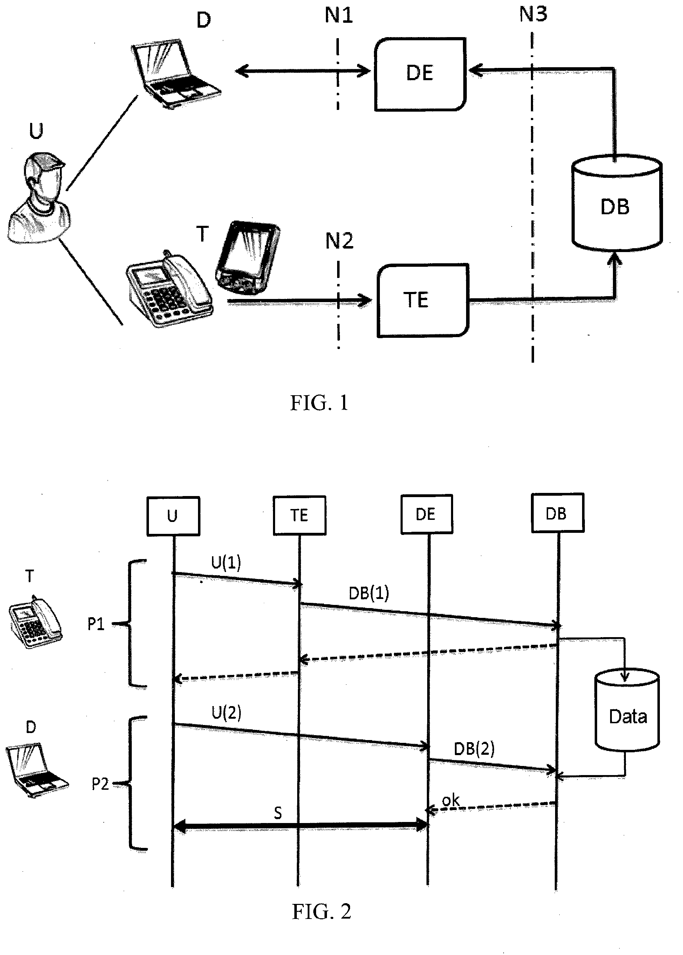

Dem erfindungsgemäßen Verfahren liegt die in FIG. 1 dargestellte erfindungsgemäße Anordnung zugrunde. Es wird davon ausgegangen, dass die Übermittlung von Rufnummerninformationen (CLIP) im Telefonnetz (PSTN) weit verbreitet ist und dass solche Informationen nur mit großem technischem Aufwand und Spezialwissen beeinflusst werden können. Damit kann im hohen Maße sichergestellt werden, dass die Telefonverbindung von einem speziellen Endgerät oder einem Endgerät durch technische Komponenten, wie SIM-Karten, zugewiesene Identität, initiiert wurde. Wird nun zusätzlich zu einer zentralen Datenendeinrichtung DE (Server im VPN) eine zentrale Telefonendeinrichtung TE vorgesehen, welche Telefonanrufe registrieren kann und diese Aktivitäten sicher zur zentralen Datenendeinrichtung DE weiterleiten kann, so ist es möglich, einen Benutzer/Anwender U durch einen Anruf mit einem dem System bekannten Telefonendgerät T auf eine spezielle, der zentralen Telefonendeinrichtung TE zugewiesenen Rufnummer, zu authentifizieren. Beabsichtigt der Anwender U mit einem Datenverarbeitungsgerät D (beispielsweise PC mit Monitor und Dateneingabevorrichtung) über ein erstes Kommunikationsnetz N1, zum Beispiel dem Internet, die zentrale Datenendeinrichtung DE zu erreichen, um ihre Dienste zu nutzen oder Daten auszutauschen, muss er sich authentifizieren.

Eine grundlegende Forderung der erfindungsgemäßen Lösung ist, dass alle möglichen Anwender U in einer Datenbank DB registriert sind. Auf diese Registrierung wird dann im Authentifizierungsverfahren von der Datenendeinrichtung DE und der Telefonendeinrichtung TE über ein sicheres Netz N3 zugegriffen. Zur Registrierung für jeden Anwender U sind seine Login-Daten einer Datenverbindung D-DE (siehe FIG. 2, U(2)) und zusätzliche Parameter für eine telefonische Verbindung T-TE (siehe FIG. 2, U1(1)), in Abhängigkeit der jeweiligen Sicherheitsstufe, notwendig. Die Login-Daten bestehen aus Wissen und / oder Besitz, wobei diese nur dem Benutzer und der Datenbank DB bekannt sind. In üblicher Weise aus Benutzeridentifikation und Passwort und / oder Zugangsschlüssel, TAN, Chipkarte. Dabei handelt es sich um das Standardverfahren der Authentifizierung eines Datenendgerätes an einer zentralen Datenendeinrichtung DE. Die zusätzlichen Parameter für die telefonische Verbindung T-TE beinhalten mindestens die Adressen der Telefonverbindung z.B. die Rufnummern des Telefons T und die Zielrufnummer der Telefonendeinrichtung TE, wobei diese mehrere Adressen haben kann, welches damit eine zusätzlichen Sicherheitsfaktor darstellen. Der Anwender U muss in diesem Fall die richtige Zieladresse aus einer Menge aller möglichen Ziele kennen und benutzen.

Weitere optionale, von der Sicherheitsstufe abhängige, Parameter können sein, eine persönliche PIN und/oder biometrische Stimmenmerkmale. Alle diese Parameter werden in der zentralen Datenbasis DB abgelegt und bei jedem Authentifizierungsvorgang über das Telefonnetz N2 verifiziert. Bei einer erfolgreichen Verifizierung, wird der, den Daten zugeordnete Anwender, für die Nutzung der Datenendeinrichtung DE freigeschaltet. Danach greift das Standardverfahren der Authentifizierung eines Datenendgerätes an seiner Datenendeinrichtung durch entsprechende Login-Daten, welche dem Anwender bekannt sein müssen und welche er dann am Datenendgerät eingeben muss.

Zur Authentifizierung nutzt der Anwender also sein Telefonendgerät T und ruft damit über das Telefonnetz N2 die zentrale Telefonendeinrichtung TE, dessen Rufnummer ihm vorher bekannt sein muss, an. Die zentrale Telefonendeinrichtung TE ist über ein drittes Netz N3 mit der Datenbank DB verbunden. Sie ermittelt die Rufnummer des Anrufers, die gewählte Rufnummer und andere Daten für verschiedene Sicherheitsstufen (siehe nachfolgend) und schreibt diese in die Datenbank DB. Danach wird die Telefonverbindung beendet. Ein solcher Anruf wird nun auf zentraler Seite für eine bestimmte Zeit gespeichert und dann nach Ablauf einer Verfallszeit (bis fünf Minuten) für die spezielle Session (Aufbau der Datenverbindung) des Clients wieder gelöscht.

Versucht nun der gleiche Benutzer U jetzt mit seinem Datenendgerät D eine Verbindung über das erste Netz N1 eine Datenverbindung zum zentralen Server/ Datenendeinrichtung DE aufzubauen, wird diese Sitzungsanfrage vom Server DE angenommen. Während dieser Phase prüft die Datenendeinrichtung DE, durch eine Datenbankanfrage an die Datenbank DB, ob die angefragte Verbindung autorisiert ist. Das Netz N3 ist ein sicheres Netz, in dem sich die Datenendeinrichtung DE, die Telefonendeinrichtung TE und die Datenbank DB befinden. Dabei wird es sich in den meisten Fällen um das lokale Netzwerk der Datenendeinrichtung DE handeln. Wird ein entsprechender Datensatz in der Datenbank DB gefunden, so wird die Kommunikation zwischen der Datenbank DB und Datenendeinrichtung DE zugelassen und eine gesicherte Sitzung (verschlüsselte Datenübertragung) eröffnet. Wenn kein Datensatz gefunden werden konnte oder die Verfallszeit für die Gültigkeit der Autorisierung abgelaufen ist, wird die Verbindungsabfrage abgelehnt.

Da für dieses erfindungsgemäße Verfahren der Sicherheitsstufe 1 nur die Rufnummerninformation ausreicht/erforderlich ist, wird der Anruf von der zentralen Telefonendeinrichtung TE nicht angenommen, sondern nach der Registrierung abgewiesen. Dadurch entstehen dem Benutzer U keinerlei Telefonkosten. Weiterhin kann beim erfindungsgemäßen Verfahren nach Wahl des Benutzers zur gewählten Rufnummer - beim Registrierungsprozess oder auch nachträglich - eine Sicherheitsstufe zugeordnet werden.
Die Sicherheit der Authentifizierung sollte weiter erhöht werden, wenn der Rufnummerninformation des Telefonanrufes nicht getraut werden kann oder als zu unsicher eingestuft wird. In diesem Fall des erfindungsgemäßen Verfahrens der Sicherheitsstufe 2 ist es möglich, die zentrale Telefonendeinrichtung TE um die Funktionalität zu erweitern, den Anruf anzunehmen und die Betätigung der Telefontasten oder einfacher Sprachelemente des Benutzers U zu erkennen. Dadurch ist es möglich, eine vorher definierte Zusatzinformation, wie zum Beispiel eine PIN oder Identifikationszeichenkette, abzufragen und zusätzlich zur Rufnummer dem Authentifikationskriterium hinzuzufügen.

Beim erfindungsgemäßen Verfahren der Sicherheitsstufe 3 ist vorgesehen, dass zusätzlich oder parallel, zu den der Sicherheitsstufe 2 beschriebenen Möglichkeiten, eine biometrische Prüfung der Stimme des Benutzers U durchzuführen. Dadurch erreicht man zusätzlich zur Identifizierung eines speziellen Endgerätes, die direkte Identifizierung des Benutzers. Es handelt sich dabei um das, aus dem Stand der Technik bekannte biometrische Verfahren der telefonischen Sprecherverifizierung. Dafür ist es in der Regel notwendig, dass alle Benutzer des Systems im Vorfeld eine Trainingsphase absolvieren, in der einige Sprachdaten zur Ermittlung eines individuellen Stimmprofils (Voiceprint) erfasst werden. Das Stimmprofil wird als zusätzliches Kriterium im Datensatz des Benutzers U gespeichert. Ein Verfahren zur Authentifizierung einer Person, wobei eine Telefonverbindung zwischen der Person und einer Authentifizierungseinrichtung hergestellt wird, die auf ein Stimmprofil der Person zugreifen kann, ist an sich aus der DE 10 2006 047793 A1 bekannt. Im Hinblick auf eine besonders sichere Authentifizierung ist diese derart ausgestaltet und weitergebildet, dass die Authentifizierung anhand des Stimmprofils in Kombination mit mindestens einer hinterlegten Telefonnummer erfolgt. Dabei muss nicht nur das Stimmprofil, das bereits eine sehr hohe Sicherheit bei der Identifizierung einer Person gewährleistet, herangezogen werden, sondern es kann ein weiteres Sicherheitsmerkmal in Form einer hinterlegten Telefonnummer berücksichtigt werden. Je nach Anwendungsfall könnte die Telefonnummer in alternativer oder zusätzlicher Weise in einer bezüglich der Authentifizierungseinrichtung externen Datenbank hinterlegt sein.

Dies könnte beim erfindungsgemäßen Verfahren den Fall betreffen, dass die Verwaltung hinterlegter Telefonnummern durch einen auswählbaren Dienstanbieter - getrennt von der Authentifizierungseinrichtung - erfolgen soll. Man könnte sich dabei vorstellen, dass die Authentifizierungseinrichtung bei beispielsweise einer Bank oder einem Verkäufer installiert ist und die Verwaltung der hinterlegten Telefonnummern über einen speziellen Provider erfolgt, der hierfür eine definierte Datenbank DB betreibt. Im vorgenannten Fall werden die Stimmprofile auch dem Benutzerkonto der Datenendeinrichtung DE zugeordnet, so dass die Telefonverbindung nur zur Aufzeichnung der Audioinformation genutzt wird und die eigentlicher Verifizierung bezogen auf das Login in der Datenendeinrichtung DE durchgeführt wird. Insbesondere kann die Authentifizierungseinrichtung ein Sprachserver sein. Auf einem derartigen Sprachserver könnten geeignete Spracherkennungs- und Authentifizierungsprogramme betreibbar sein. Ein großes Anwendungsgebiet könnte im Bereich von Kauf- und/oder Zahlungsvorgängen liegen, wobei die Authentifizierung einer Person automatisch mit dem Anruf und der Nennung des Namens erfolgen könnte. Die Übermittlung der persönlichen Daten kann während oder parallel zu der Telefonverbindung erfolgen, die zur Authentifizierung erforderlich ist. Insoweit können immer aktuelle Daten bereitgestellt werden. Das Risiko, dass zu einem früheren Zeitpunkt bereits hinterlegte persönliche Daten nicht mehr aktuell sind, ist damit ausgeschlossen. Der unwahrscheinliche, wenn nicht gar unmögliche Fall, dass ein Dritter von der Rufnummer des Kunden aus eine Bestellung ausführt - mit der nachgeahmten Stimme des Kunden - führt lediglich dazu, dass der Kunde an seine Adresse eine Ware ausgeliefert bekommt, die er ja gemäß Rückgaberecht wieder zurückschicken kann. Die Übermittlung von Name, Adresse, Telefonnummern, Bankdaten und/oder Kreditkartendaten kann folglich über E-Mail, Telefon, Post, Fax oder SMS erfolgen. Die Übermittlung des Stimmprofils kann ausschließlich über Telefon, Voice-Over-IP, PC mit Mikrofon und ein Übersenden der WAV-Datei über E-Mail erfolgen. Alternativ kann eine Übertragung über eine Website erfolgen, mit Hilfe derer das Stimmprofil direkt auf gesprochen werden kann (Registrierungsseite). Dies kann auch direkt an einem Point of Sale erfolgen, wo der Kunde direkt sein Profil aufsprechen kann.

Die höchste Sicherheitsstufe 4 beim erfindungsgemäßen Verfahren kann zusätzlich zu dem erfindungsgemäßen Verfahren gemäß der Sicherheitsstufen 2 und/oder 3 angewandt werden. In diesem Fall wird ein weiterer Nachteil herkömmlicher, bekannter Sicherungsverfahren eliminiert, nämlich der Austausch des Schlüssels für die Verschlüsselung der eigentlichen Nutzdaten. In den meisten klassischen Verfahren, wird der eigentliche Schlüssel für die Datenverschlüsselung zwischen beiden Gegenstellen, vorliegend zwischen dem Datenverarbeitungsgerät D und der Datenendeinrichtung DE, auf dem gleichen Kanal mit einer anderen Art der Verschlüsselung ausgetauscht, zum Beispiel mit dem "Public Key"-Verfahren. Dieses Verfahren gilt zurzeit noch als sicher. Der große Nachteil besteht aber darin, dass auch hierbei die gesamte Kommunikation über einen Kanal abläuft und damit alle übertragenen Daten einem möglichen Angreifer zugänglich sind.

Um dies zu umgehen, wird im erfindungsgemäßen System und Verfahren, die bestehende Telefonverbindung auch dafür genutzt, den Schlüssel oder Teile davon auszutauschen. Dafür wird die Telefonverbindung nicht nach der Authentifizierung beendet, sondern aufrechterhalten bis der Benutzer U die Datenverbindung am Datenverarbeitungsgerät D eingeleitet hat. Um dies zu tun, muss dem Datenverarbeitungsgerät D zusätzlich zu den Zugangsdaten, der vom Telefonendgerät T gelieferte Schlüssel übergeben werden.
(A) Diese Schlüsselübergabe kann im einfachsten Fall manuell durchgeführt werden. Dazu wird die Telefonendeinrichtung T um die Funktion erweitert, beliebige, durch die Datenendeinrichtung DE generierte Schlüssel per Sprache auf dem Audio-Telefonkanal zum Benutzer U zu übertragen. Dazu kann zum Beispiel das Verfahren "Text To Speech" genutzt werden. Der Benutzer U gibt dann die gehörte Information am Datenverarbeitungsgerät D manuell ein. Beide Kommunikationsseiten benutzen dann diesen Schlüssel zur Verschlüsselung und Entschlüsselung der Nutzdaten.
(B) Eine weitere Möglichkeit besteht darin, dass die Telefonendeinrichtung TE, den durch die Datenendeinrichtung DE erzeugten Schlüssel nicht als Sprachinformation überträgt, sondern diese Information in ein geeignetes Signal transformiert, welche auf dem Audiokanal einer Telefonverbindung übertragen werden kann. Hierfür kommen bekannte Verfahren, wie z.B. das Doppelton-Mehrfrequenz-Verfahren (DTMF) oder andere Modulationsverfahren, welche zur Datenübertragung über das Telefonnetz genutzt werden, in Frage. Auf dem Telefonendgerät T des Anwenders U muss in diesem Fall eine Applikation (App) laufen, die dieses Signal zurück transformiert und dem Anwender U zugänglich macht oder über einen zusätzlichen Kommunikationskanal dem Datenverarbeitungsgerät D direkt übergibt. Hierfür können bekannte Verfahren der Nahfeldkommunikation (NFC) oder zum Beispiel Bluetooth eingesetzt werden. Diese Funktionen stehen bereits bei modernen mobilen Telefonendgeräten T (Smartphones) standardmäßig zur Verfügung. Auch hierbei benutzen beide Kommunikationsseiten diesen Schlüssel zur Verschlüsselung und Entschlüsselung der Nutzdaten.

Das erfindungsgemäße Verfahren und die Anordnung werden nachfolgend im Einzelnen im Sequenzdiagramm der FIG. 2 kurz beschrieben, in welcher der zeitliche Ablauf eines erfolgreichen Authentifizierungsprozesses dargestellt ist. In der Phase P1 ruft der Anwender U mit seinem Telefon T die Telefonendeinrichtung TE an. Die Telefonendeinrichtung TE erfasst die Daten vom Telefonendgerät T und optional vom Anwender/Benutzer U und schreibt diese durch die Prozedur DB(1) in die Datenbank DB. Danach wird die Telefonverbindung U(1) beendet.

In der Phase P2 eröffnet der Anwender U mit seinem Datenverarbeitungsgerät/ -endgerät D eine Datenverbindung U(2) zur Datenendeinrichtung DE. Die Datenendeinrichtung DE prüft die Autorisierung der Verbindung U(2) durch einer Datenbankanfrage DB(2). Diese liefert in diesem Fall eine positive Rückmeldung. Dadurch wird von der Datenendeinrichtung DE der Verbindungsaufbau akzeptiert und eine Datensitzung S initiiert.

Im Anwendungsbeispiel findet die Kommunikation zwischen Anwender U und einen Dienstleister über die Kommunikationsnetze N1 und N2 statt. Der Anwender benötigt ein Datenverarbeitungsgerät D und eine Telefonendgerät T. Für die Dienste ist eine Datenendeinrichtung DE, Telefonendeinrichtung TE und Datenbank DB notwendig. Die Darstellung gemäß der FIG. 2 soll vermitteln, wie eine VPN-Verbindung mit dem erfindungsgemäßen Verfahren angewendet werden kann.

Die Initiierung der verschlüsselten Verbindung erfolgt in zwei Phasen. In der ersten Phase authentifiziert sich der Anwender U mit dem Telefonendgerät T an der Telefonendeinrichtung TE über das Netz N2. Mögliche Telefonendgeräte sind mobile oder stationäre Telefone, deren Telefonnummer in der Datenbank DB für den Anwender hinterlegt sind. Der Zugriff auf die Datenbank DB erfolgt auf der Serverseite über das Netz N3. Der Anwender wählt die für ihn vorgesehene Rufnummer der Telefonendeinrichtung TE. Von dieser wird anhand der übermittelten Informationen das weitere Vorgehen entschieden. Eine übertragene Telefonnummer (CLIP) führt zum Abgleich von dieser mit der Datenbank DB. Die in diesem Beispiel für den Anwender aktivierte Sicherheitsstufe 2 wird nun dazu führen, dass dieser seinen PIN eingeben oder eine einfache Spracheingabe vornehmen muss. Alle vom Anrufer übermittelten Informationen werden zusammen mit dem Verifizierungsstatus und dem Authentifizierungszeitpunkt in der Datenbank DB vermerkt und stehen in Beziehung zum Anwender U.

Während der zweiten Phase stellt der Anwender U mit Hilfe des Datenverarbeitungsgerät D und seinen Authentifizierungsdaten eine Verbindung zum Netz N1 her. Das Datenverarbeitungsgerät D ist in der Praxis häufig ein Router, welcher ein lokales, internes Netz (LAN) des Anwenders U mit dem Netz N1 verbindet. Der Router ist mit einer Clientsoftware ausgestattet und wird so konfiguriert, dass dieser das Verbindungsziel kennt. Die Sicherstellung der verschlüsselten Verbindung wird durch Schlüssel und Zertifikate realisiert. Die Voraussetzungen dafür sind, dass diese Schlüssel und Zertifikate von einer Zertifizierungsstelle (CA) auf beiden Seiten verteilt wurden. Dabei handelt es sich um sogenannte Public-Key-Verschlüsselungsverfahren, beispielsweise nach X.509.

Die Initiierung der verschlüsselten Verbindung wird durch eine Aktion des Anwenders U ausgelöst. Vor der Aktion signalisiert eine rote LED am Datenverarbeitungsgerät/endeinrichtung D, dass keine Verbindung besteht. Dieser Status ändert sich sobald eine Aktion, wie z.B. das Verbinden eines USB-Stick mit dem Router oder das Betätigen einer Taste, stattfindet. Eine gelbe LED weist darauf hin, dass sich dieser im Verbindungsaufbau befindet. Auf einem Kontrollkanal (CC) wird nun verschlüsselt eine Anfrage zu dem Server/Datenendeinrichtung DE erstellt und die Benutzerdaten und Passwort übertragen. Die Information des Zertifikats des Anwenders U wird ebenfalls übermittelt und vom Server DE nach dem Entschlüsseln protokolliert. Der Server DE verarbeitet Benutzerdaten, indem er über Netz N3 die Datenbank DB abfragt. Währenddessen wird neben den Authentifizierungsdaten auch die telefonische Authentifikation innerhalb des zeitlichen Rahmens überprüft. Bei erfolgreicher Authentifizierung folgt die Generierung eines Schlüssels für die Sitzung und die Übermittlung an die Gegenstelle über den Kontrollkanal. Als Verfahren kommt hier eine symmetrische Verschlüsselung zum Einsatz.

Ab diesem Zeitpunkt erfolgt die Kommunikation der Daten im verschlüsselten Datenkanal (DC) und eine grüne LED zeigt die bestehende Verbindung an. Damit kann der Anwender U aus seinem lokalen Netz (LAN) diesen verschlüsselten Kanal mit jedem beliebigen Endgerät D für die Datenkommunikation nutzen.

## Patentansprüche

1. Verfahren zur Überprüfung einer Zugangsberechtigung eines Benutzers zu einem Dienst einer zentralen Datenendeinrichtung (DE), bei dem der Benutzer (U) mit einem Telefonendgerät (T) über ein zweites Netz (N2) eine Verbindung mit einer zentralen Telefonendeinrichtung (TE) und mit einem Datenendgerät (D) eine Verbindung über ein erstes Netz (N1) mit der zentralen Dateneinrichtung (DE) herstellt, wobei in einer Datenbank unter anderem die Telefonnummer des Telefonendgeräts (T) abgespeichert ist, **dadurch gekennzeichnet, dass** der Benutzer (U) in einem Registrierungsprozess vorher für verschiedene Sicherheitsstufen von der zentralen Telefonendeinrichtung (TE) erfasst worden ist, dass zur telefonischen Authentifizierung des Benutzers (U), dieser nach dem Registrierungsprozess im ersten Schritt in der niedrigsten Sicherheitsstufe mit einem Telefonendgerät (T) über ein zweites Netz (N2) auf einer speziellen, der zentralen Telefonendeinrichtung (TE) zugewiesenen Rufnummer anruft, dass im zweiten Schritt die zentrale Telefonendeinrichtung (TE) die Rufnummer des Anrufers und die gewählte Rufnummer und die nach Wahl des Benutzers (U) zur gewählten Rufnummer beim Registrierungsprozess zugeordnete Sicherheitsstufe ermittelt und über ein drittes Netz (N3) diese in eine Datenbank (DB) schreibt und die Telefonverbindung derart beendet, dass der Anruf von der zentralen Telefonendeinrichtung (TE) nicht angenommen, sondern nach der Verifizierung abgewiesen wird, dass im dritten Schritt ein solcher Anruf für eine bestimmte Zeit gespeichert und dann nach Ablauf einer Verfallszeit dieser in der Datenbank (DB) wieder gelöscht wird, dass im vierten Schritt der Benutzer (U) mit seinem Datenendgerät (D) durch die Übermittlung von Daten, die dem Benutzer (U) eindeutig zugeordnet werden können, eine Verbindung über das erste Netz (N1) mit der zentralen Dateneinrichtung (DE) herstellt, dass im fünften Schritt die Datenendeinrichtung (DE) durch eine Datenbankanfrage an die Datenbank (DB) prüft, ob diese Daten mit denen aus dem Registrierungsprozess übereinstimmen und ein Eintrag für den Benutzer aus Schritt drei vorhanden ist und dass im sechsten Schritt für den Fall, dass ein entsprechender Datensatz in der Datenbank (DB) gefunden wird, die Kommunikation zwischen Datenendgerät (D) und zentraler Dateneinrichtung (DE) zugelassen und eine gesicherte Sitzung eröffnet wird und für den Fall, dass kein Datensatz gefunden werden konnte oder die Verfallszeit für die Gültigkeit der Autorisierung abgelaufen ist, die Abfrage der Datenbank (DB) durch die Dateneinrichtung (DE) abgelehnt wird.

2. Verfahren nach Anspruch 1, **dadurch gekennzeichnet, dass** zur weiteren Erhöhung der Sicherheit der Authentifizierung, die zentrale Telefonendeinrichtung (TE) um die Funktionalität erweitert wird, den Anruf anzunehmen und die Betätigung der Telefontasten oder einfache Sprachelemente des Benutzers (U) zu erkennen.

3. Verfahren nach Anspruch 1 oder 2, **dadurch gekennzeichnet, dass** zur weiteren Erhöhung der Sicherheit der Authentifizierung, eine biometrische Prüfung der Stimme des Benutzers (U) erfolgt, indem alle Benutzer des Systems im Vorfeld eine Trainingsphase absolvieren, in welcher einige Sprachdaten zur Ermittlung eines individuellen Stimmprofils erfasst werden und das Stimmprofil als zusätzliches Kriterium im Datensatz des Benutzers (U) in der Datenbank (DB) gespeichert wird.

4. Verfahren nach Anspruch 1, 2 oder 3, **dadurch gekennzeichnet, dass** zur weiteren Erhöhung der Sicherheit der Authentifizierung, die zwischen Telefonendgerät (T) über das zweites Netz (N2) zur zentralen Telefonendeinrichtung (TE) bestehende Telefonverbindung auch dafür genutzt wird, einen Schlüssel oder Teile davon auszutauschen, wozu die Telefonverbindung nicht nach der Authentifizierung beendet, sondern aufrecht erhalten wird, bis der Benutzer (U) die Datenverbindung an seinem Datenendgerät (D) eingeleitet hat, wobei der zentralen Dateneinrichtung (DE) zusätzlich zu den Zugangsdaten, der vom Telefonendgerät (T) gelieferte Schlüssel übergeben wird.

5. Verfahren nach Anspruch 4, **dadurch gekennzeichnet, dass** die Schlüsselübergabe durch den Benutzer (U) an seinem Datenendgerät (D) manuell durchgeführt wird, wozu ein durch die zentrale Dateneinrichtung (DE) generierter Schlüssel per Sprache auf dem Audio-Telefonkanal von der Telefonendeinrichtung (TE) zum Telefonendgerät (T) des Benutzers (U) übertragen wird.

6. Verfahren nach Anspruch 5, **dadurch gekennzeichnet, dass** der generierte Schlüssel nicht als Sprachinformation übertragen wird, sondern diese Information in ein Signal nach einem Doppelton-Mehrfrequenz-Verfahren (DTMF) oder anderen Modulationsverfahren transformiert wird, welches auf dem Audiokanal einer Telefonverbindung zum Telefonendgerät (T) des Benutzers (U) übertragen wird.

7. Verfahren nach Anspruch 6, **dadurch gekennzeichnet, dass** mittels einer Applikation (App) eine Rücktransformation des Signals auf dem Telefonendgerät (T) des Benutzers (U) vorgenommen wird.

8. Verfahren nach Anspruch 6, **dadurch gekennzeichnet, dass** das Signal über einen zusätzlichen Kommunikationskanal zwischen Telefonendgerät (T) und Datenendgerät (D) des Benutzers (U) direkt übergeben wird.

9. Verfahren nach einem der Ansprüche 1 bis 4, **dadurch gekennzeichnet, dass** nach Wahl des Benutzers beim Registrierungsprozess zur gewählten Rufnummer eine Sicherheitsstufe zugeordnet wird.

## Claims

1. A method for checking a user's access authorization to a service of a central data terminal device (DE), whereby the user (U) by a telephone terminal (T) establishes a connection via a second network (N2) to a central telephone terminal (TE) and by a data terminal (D) establishes a connection via a first network (N1) to the central data device (DE), wherein the telephone number of the telephone terminal (T) inter alia is stored in a database, **characterized in that** in a registration process the user (U) previously have been detected for various security levels by the central telephone terminal (TE), that for the telephone authentication of the user (U) after the registration process, the user (U) in the first step is calling with the lowest security level by a telephone terminal (T) via a second network (N2) with a special telephone number assigned to the central telephone terminal (TE), that in the second step the central telephone terminal (TE) determines the phone number of the caller and the dialed number and the security level assigned by the user to the dialed phone number during the registration process, and via a third network (N3) this writes to a database (DB) and terminates the telephone connection so that the call from the central telephone terminal (TE) is not accepted, but after the verification is rejected, that in the third step, such a call is stored for a certain time and then after expiring of this expiration date is deleted in the database (DB), that in the fourth step, the user (U) with his data terminal (D) establishes a connection via the first network (N1) with the central data terminal device (DE) by transmitting data that can be uniquely assigned to the user, that in the fifth step the central data terminal device (DE), by a database request to the database (DB), checks whether these data match those of the registration process and an entry for the user in step three is present and that in the sixth step, in the event that a corresponding record in the database (DB) is found, the communication between data terminal (D) and central data terminal device (DE) is allowed and a secure session is opened and in the case that no record could be found or the expiration time for the authorization is expired, the query of the database (DB) is rejected by the central data terminal device (DE).

2. The method according to claim 1, **characterized in that** to further increase the security of the authentication, the central telephone terminal (TE) is extended by the functionality to accept the call and to recognize the operation of the telephone keys or simple speech elements of the user (U).

3. The method according to claim 1 or 2, **characterized in that** to further increase the security of the authentication, a biometric examination of the user's voice (U) is carried out, whereby all users of the system in advance complete a training phase, in which some voice data are recorded to determine an individual voice profiles and in which the voice profile is stored in the database (DB) as an additional criterion in the record of the user (U).

4. The method according to claim 1, 2 or 3, **characterized in that** to further increase the security of the authentication, the existing telephone connection between the telephone terminal (T) via the second network (N2) to the central telephone terminal (TE) is also used for exchanging a key or parts of it, for which the telephone connection is not terminated after the authentication, but maintained until the user (U) has initiated the data connection at his data terminal (D), wherein the central data terminal device (DE) in addition to the access data provided the key delivered by the telephone terminal (T).

5. The method according to claim 4, **characterized in that** the key handover by the user (U) at its data terminal (D) is performed manually, including a key generated by the central data device (DE) is transmitted by voice on the audio telephone channel from the central telephone terminal (TE) to the telephone terminal (T) of the user (U).

6. The method according to claim 5, **characterized in that** the generated key is not transmitted as voice information, but this information is transformed into a signal according to a dual-tone multi-frequency (DTMF) or other modulation method, which on the audio channel of a telephone connection is transmitted to the telephone terminal (T) of the user (U).

7. The method according to claim 6, **characterized in that** by means of an application (App) a reverse transformation of the signal on the telephone terminal (T) of the user (U) is made.

8. The method according to claim 6, **characterized in that** the signal is directly transferred via an additional communication channel between the telephone terminal (T) and data terminal (D) of the user (U).

9. The method according to one of claims 1 to 4, **characterized in that** at the option of the user for the selected number during the registration process, a security level is assigned.

## Revendications

1. Procédé pour vérifier l'autorisation d'accès d'un utilisateur à un terminal de données central (DE), dans lequel l'utilisateur (U) se connecte avec un terminal téléphonique (T) via un deuxième réseau (N2) à un terminal téléphonique central (TE) et établit une connexion à un terminal de données (D) via un premier réseau (N1) avec le terminal de données central (DE), dans lequel, entre autres, le numéro de téléphone du terminal téléphonique (T) est stocké, **caractérisé en ce que** l'utilisateur (U) ont été détectés à différents niveaux de sécurité par le terminal téléphonique (TE), que pour l'authentification téléphonique de l'utilisateur (U), après le processus d'enregistrement dans la première étape du niveau de sécurité le plus bas avec appeler avec un terminal téléphonique (T) via un second réseau (N2) le numéro de téléphone attribué par le terminal téléphonique central (TE), que dans le second étape le terminal téléphonique central (TE) détermine le numéro de téléphone de l'appelant et le numéro composé et le niveaux de sécurité assignés après le choix du numéro d'appel pendant le processus d'enregistrement et, via un troisième réseau (N3), écrit dans une base de données (DB) et la connexion téléphonique telle que est terminée, que l'appel du terminal téléphonique central (TE) ne pas est acceptée, mais après la vérification est rejetée, que dans la troisième étape, un tel appel est stocké pendant un certain temps, puis après expiration de cette date d'expiration dans la base de données (DB) est supprimé, que dans la quatrième étape, l'utilisateur (U) avec son terminal de données (D) établit une connexion via le premier réseau (N1) avec le dispositif de données central (DE) en transmettant des données qui peuvent être affectées de manière unique à l'utilisateur, que dans la cinquième étape le terminal de données central (DE) vérifie d'une requête par la base de données (DB) si ces données correspondent à celles du processus d'enregistrement et une entrée pour l'utilisateur est présent à l'étape trois et qu'à la sixième étape, dans le cas où un enregistrement correspondant dans la base de données (DB) est trouvé, la communication entre le terminal de données (D) et le terminal de données central (DE) est autorisée et une session sécurisée est ouverte et dans le cas **en ce que** aucun enregistrement n'a pu être trouvé ou que l'expiration de l'autorisation a expiré, la requête de la base de données (DB) est rejetée par le terminal de données central (DE).

2. Procédé selon la revendication 1, **caractérisé en ce que** pour augmenter encore la sécurité de l'authentification, le terminal téléphonique central (TE) est étendu par la fonctionnalité pour accepter l'appel et à reconnaître le fonctionnement des touches téléphoniques ou des simples éléments vocaux de l'utilisateur (U).

3. Procédé selon la revendication 1 ou 2, **caractérisé en ce que** pour augmenter encore la sécurité de l'authentification, un examen biométrique de la voix de l'utilisateur (U) est effectué par tous les utilisateurs du système pour compléter une phase d'apprentissage dans laquelle les profils vocaux sont enregistrés et le profil vocal est stocké en tant que critère supplémentaire dans l'enregistrement de l'utilisateur (U) dans la base de données (DB).

4. Procédé selon la revendication 1, 2 ou 3, **caractérisé en ce que** pour augmenter encore la sécurité de l'authentification, on utilise également le connexion téléphonique existante entre le terminal téléphonique (T) via le deuxième réseau (N2) et le terminal téléphonique central (TE) échanger un clé ou parties de celui-ci, pour lesquelles la connexion téléphonique n'est pas terminée après l'authentification, mais maintenues jusqu'à ce que l'utilisateur (U) ait initié la connexion de données à son terminal (D), le terminal de données central (DE) s'ajoutant aux données d'accès le clé livrée fournies par le terminal téléphonique (T).

5. Procédé selon la revendication 4, **caractérisé en ce que** le transfert de clé par l'utilisateur (U) à son terminal de données (D) est effectué manuellement, ce qui une clé générée du terminal téléphonique (TE) est transmis par la voix sur le canal téléphonique audio à partir au terminal téléphonique (T) de l'utilisateur (U).

6. Procédé selon la revendication 5, **caractérisé en ce que** la clé générée n'est pas transmise en tant qu'informations vocales, mais cette information est transformée en un signal selon une méthode multifréquence à deux tonalités (DTMF) ou autre, qui sont transmis sur le canal audio d'une connexion téléphonique vers le terminal téléphonique (T) de l'utilisateur (U).

7. Procédé selon la revendication 6, **caractérisé en ce que** sur le terminal téléphonique (T) de l'utilisateur (U) une opération de transformation inverse est effectué du signal au moyen d'une application (App).

8. Procédé selon la revendication 6, **caractérisé en ce que** le signal est transféré directement via un canal de communication supplémentaire entre le terminal téléphonique (T) et le terminal de données (D) de l'utilisateur (U).

9. Procédé selon l'une des revendications 1 à 4, **caractérisé en ce que,** au choix de l'utilisateur dans le processus d'enregistrement un niveau de sécurité est attribué du numéro sélectionné.
